# EUROPEAN PATENT SPECIFICATION

(11) **EP 1 727 720 B1**
(45) Date of publication and mention of the grant of the patent: **09.01.2008**
(21) Application number: 04723533.8
(22) Date of filing: 26.03.2004
(51) Int. Cl.: B61F 5/30

(54) **RAILWAY BOGIE**
DREHGESTELL EINES EISENBAHNFAHRZEUGS
BOGIE DE VOIE FERREE

(43) Date of publication of application: 06.12.2006
(73) Proprietor: AB SKF, S-415 50 Göteborg (SE); ContiTech Luftfedersysteme GmbH, 30165 Hannover (DE)
(72) Inventor: GEDENK, Volker, 30966 Hemmingen (DE); HOPPMANN, Friedrich, 30966 Hemmingen (DE); SCHMIECHEN, Rolf, 97525 Schwebheim (DE); SKILLER, John, NL-3766 AK Soest (NL)
(74) Representative: Kohl, Thomas
(86) International application number: PCT/EP2004/003197
(87) International publication number: WO 2005/091698

(56) References cited:
- EP-A- 1 369 616
- GB-A- 931 588
- US-A- 2002 089 102

## Description

The invention relates to an axlebox-spring-unit of a railway bogie comprising at least one hydraulic spring and an axlebox.

From UIC standard a bogie with helical springs is well known, whereby the axlebox suspension consists of helical springs in combination with friction damping. Thereby the springs rest on support arms integral with the lower part of the axlebox housing and are connected with the bogie frame using caps integral with the bogie frame for taking up the top of the springs.

US 2002-0089102 A1 discloses a hydraulic spring comprising a membrane. Therein it is also disclosed that said hydraulic spring is for use in rail vehicles especially as a primary spring.

EP 1 369 616 A1 discloses a hydraulic spring which incorporates a gas-filled cavity with a conical shape and a volume which is variable by compression. An application of the proposed hydraulic spring as a primary spring for rail vehicles is also disclosed.

Further the catalogue of the company ContiTech Luftfedersysteme GmbH in Hannover, Germany, "Air Spring Systems for Modern Rail Vehicles", printed and distributed in October 1998 discloses the use of hydraulic springs comprising a membrane in two-axle bogies.

GB 931 588 A discloses a railway vehicle axle box being provided on each side of the axle bearing with a bore slidably receiving resilient units connected in series and arranged so as to be stressed in shear. Each unit comprises an outer shell slidable in the bore, an inner shell slidably mounted on a pillar and a rubber bush bonded to the shells. A spiral lubrication groove is provided in each bore which latter may also be used to provide hydraulic damping.

One object of the present invention is to provide an improved railway bogie comprising at least an axlebox and a hydraulic spring, so that the railway bogie has a simplified build-up and is therewith cheaper to produce.

The object of the invention is achieved by the subject of claim 1. Preferable embodiments are described in the dependent claims.

According to claim 1 an axlebox-spring-unit of a railway bogie comprises at least one hydraulic spring and an axlebox characterized by the fact that at least a part of said axlebox forms at least a part of a boundary of a volume for a hydraulic fluid of said hydraulic spring, whereby a spring element of said hydraulic spring is connected to said part of said axlebox.

By the fact that an anyway existing part of the axlebox is designed and used to form a part of the housing of the hydraulic spring the number of components is reduced in total so that a lower fault liability and a more favourable cost position can be achieved.

Further advantages, features and details of the invention are described with respect to one preferred embodiment of the invention with reference to the drawings wherein:
- Figure 1: is a longitudinal cross section in the region of one wheel of a bogie and
- Figure 2: is a sectional view along the line BB of Figure 1.

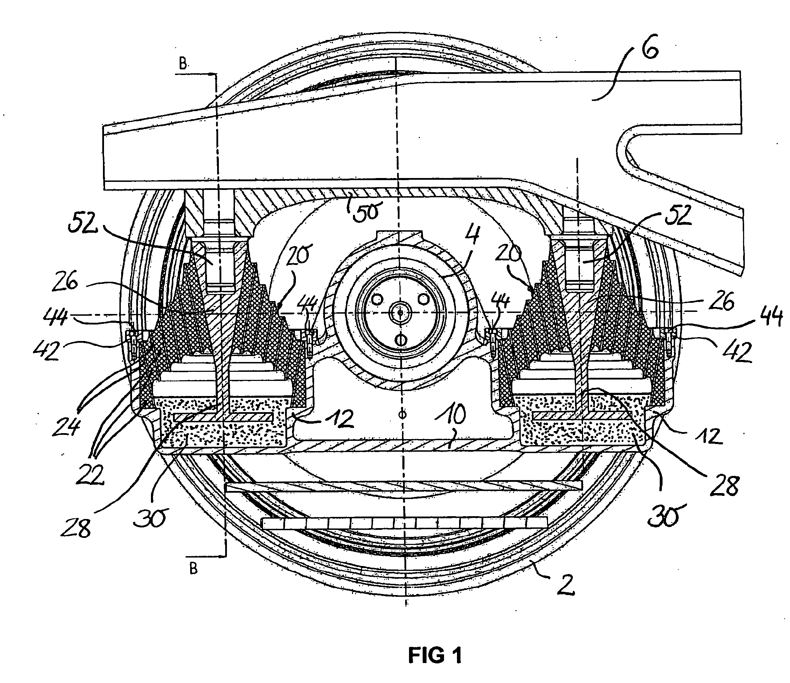

Figure 1 shows a longitudinal cross section in the region of one wheel 2 of a bogie of the so-called Y 25 type, whereby the cut is directed according to a plane being defined by the axes of rotational symmetry of a first and second hydraulic spring. The pictured section of the bogie comprises an axlebox 10 with a rolling bearing 4 mounted in a middle region of the axlebox 10. The rolling bearing 4 supports one end of one of the two axles of the bogie.

A base of the axlebox 10 is extended to the left and the right side forming a cup shaped region 12 at each of said sides. Each of said hydraulic springs comprises a spring element 20, which is attached to each of said cup shaped regions 12 of the axlebox 10. A metallic centrepiece 26 is located in the centre of each of the spring elements 20.

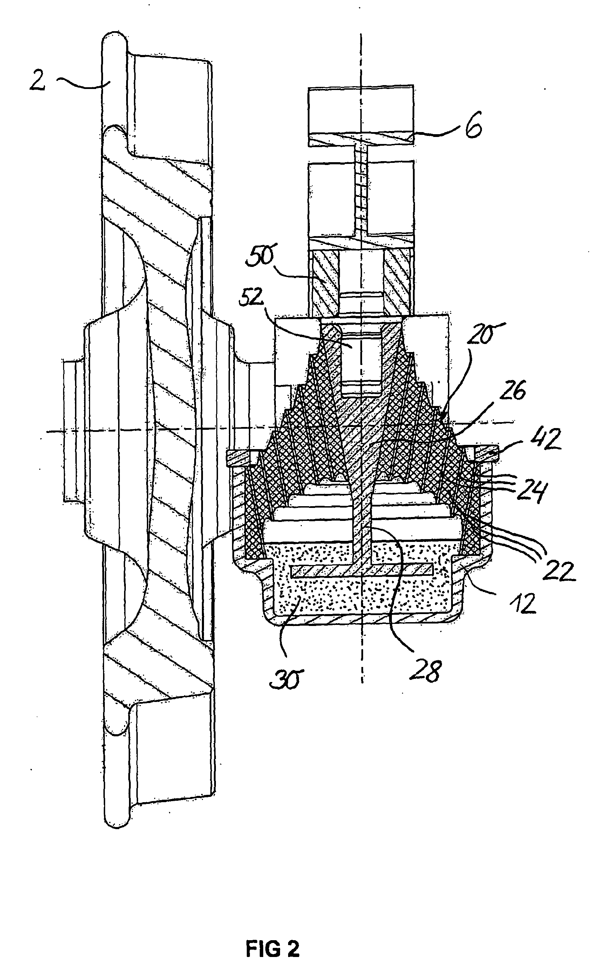

These two centrepieces 26 are attached to one bridging adapter 50. Therefore the centrepieces 26 and the bridging adapter 50 have bores for connecting the centrepieces 26 with the bridging adapter 50 via two bolts 52 pictured uncut in Figure 1 and 2. In other embodiments the bolts 52 can be integral parts of the centrepieces 26 or of the bridging adapter 50 or the centrepieces 26 can be connected to the bridging adapter 50 by any other connecting means.

The bridging adapter 50 is attached to a longeron of a frame 6 of the bogie, whereby this longeron extends in a longitudinal direction parallel to the rails and is pictured uncut in Figure 1. Preferably the bridging adapter 50 is connected to the bogie frame 6 by welding.

In the following just that left cup shaped region 12 in connection with the left spring element 20 is described in detail, because the same applies to the right cup shaped region 12 in connection with the right spring element 20. Therefore Figure 2 shows a sectional view along the line BB of Figure 1. The spring element 20 comprises sleeve shaped elastomeric elements 22 and intermediate sleeve shaped metallic elements 24 in an alternating succession, whereby the elastomeric and the metallic elements 22 and 24 are connected by way of vulcanisation. Also the centrepiece 26 is connected by way of vulcanisation to its adjacent elastomeric element 22.

The spring element 20 is secured to the respective cup shaped region 12 of the axlebox 10 via a sealing ring 42, which is attached to the axlebox 10 via screws 44. In other embodiments the spring element 20 also can be directly vulcanised to the cup shaped region 12. The spring elements 20 forms together with the respective cup shaped region 12 of the axlebox 10 a volume for a fluid 30 particularly a hydraulic fluid. This volume is at least partly filled with the fluid 30. The centrepiece 26 is prolonged into said volume forming a plunger shaped region 28. Thereby at least a disk shaped region at the end of the plunger shaped region 28 is dipped into the fluid 30, so that this arrangement fulfils the function of a damper. So the cup shaped region 12 of the axlebox 10 together with the respective spring element 20 and the fluid 30 form together the hydraulic spring.

In another embodiment of the invention a hydraulic spring can be used, e.g. according to the already cited US 2002-0089102 A1, comprising a membrane instead of the plunger shaped section 28 of the centrepiece 26, whereby the cup shaped region 12 of the axlebox 10 is then also one part of the housing of the hydraulic spring.

### List of reference signs

- 2: wheel
- 4: rolling bearing
- 6: bogie frame

- 10: axlebox
- 12: cup shaped region

- 20: spring element
- 22: elastomeric element
- 24: metallic element
- 26: centrepiece
- 28: plunger shaped region

- 30: fluid

- 42: sealing ring
- 44: screw

- 50: bridging adapter
- 52: bolt

## Claims

1. Axlebox-spring-unit of a railway bogie comprising at least one hydraulic spring and an axlebox **characterized by** the fact that at least a part of said axlebox (10) forms at least a part of a boundary of a volume for a hydraulic fluid (30) of said hydraulic spring, whereby a spring element (20) of said hydraulic spring is connected to said part of said axlebox (10).

2. Axlebox-spring-unit of claim 1, whereby said part of said axlebox (10) comprises a cup shaped region (12) of said axlebox (10).

3. Axlebox-spring-unit of one of the claims 1 or 2, whereby said spring element (20) is secured to said part of said axlebox (10) via a sealing device.

4. Axlebox-spring-unit of claim 3, whereby said sealing device is a ring (42) being screwed on said part of said axlebox (10).

5. Axlebox-spring-unit of one of the claims 1 to 4, whereby said spring element (20) comprises at least one elastomeric element (22) which is directly attached to said part of said axlebox (10).

6. Axlebox-spring-unit of one of the claims 1 to 5, whereby said spring element (20) comprises a centrepiece (26) which extends into said volume for said hydraulic fluid (30) forming a plunger shaped region (28).

7. Axlebox-spring-unit of one of the claims 1 to 6, whereby said spring element (20) comprises elastomeric elements (22) and rigid elements (24) in an alternating succession.

8. Axlebox-spring-unit of claim 7, whereby said elastomeric and rigid elements (22, 24) are sleeve shaped.

9. Axlebox-spring-unit of one of the claims 7 or 8, whereby said elastomeric elements (22) are connected to said rigid elements (24) or said centrepiece (26) by way of vulcanisation.

## Patentansprüche

1. Achslagergehäuse-Feder-Einheit eines Eisenbahndrehgestells, umfassend wenigstens eine Hydraulikfeder und ein Achslagergehäuse, **dadurch gekennzeichnet, dass** wenigstens ein Teil des Achslagergehäuses (10) wenigstens einen Teil einer Begrenzung eines Raums für ein hydraulisches Fluid (30) der Hydraulikfeder bildet, wobei ein Federelement (20) der Hydraulikfeder mit dem Teil des Achslagergehäuses (10) verbunden ist.

2. Achslagergehäuse-Feder-Einheit nach Anspruch 1, wobei der Teil des Achslagergehäuses (10) einen becherartigen Bereich (12) des Achslagergehäuses (10) umfasst.

3. Achslagergehäuse-Feder-Einheit nach einem der Ansprüche 1 oder 2, wobei das Federelement (20) über eine Dichtung am Teil des Achslagergehäuses (10) gesichert ist.

4. Achslagergehäuse-Feder-Einheit nach Anspruch 3, wobei die Dichtung als ein Ring (42) ausgebildet ist, der auf das Teil des Achslagergehäuses (10) aufgeschraubt ist.

5. Achslagergehäuse-Feder-Einheit nach einem der Ansprüche 1 bis 4, wobei das Federelement (20) wenigstens ein Elastomerelement (22) umfasst, das unmittelbar am Teil des Achslagergehäuses (10) angeordnet ist.

6. Achslagergehäuse-Feder-Einheit nach einem der Ansprüche 1 bis 5, wobei das Federelement (20) ein Mittenstück (26) umfasst, das sich in den Raum für das hydraulische Fluid (30) einen Stempel (28) ausformend hinein erstreckt.

7. Achslagergehäuse-Feder-Einheit nach einem der Ansprüche 1 bis 6, wobei das Federelement (20) Elastomerelemente (22) und Versteifungselemente (24) in sich abwechselnder Folge umfasst.

8. Achslagergehäuse-Feder-Einheit nach Anspruch 7, wobei die Elastomer- und Versteifungselemente (22, 24) hülsenartig ausgebildet sind.

9. Achslagergehäuse-Feder-Einheit nach einem der Ansprüche 7 oder 8, wobei die Elastomerelemente (22) an die Versteifungselemente (24) oder das Mittenstück (26) anvulkanisiert sind.

## Revendications

1. Unité boîte d'essieu-ressort pour bogie comprenant au moins un ressort hydraulique et une boîte d'essieu **caractérisée par le fait qu'**au moins une partie de ladite boîte d'essieu (10) forme au moins une partie d'une limite d'un volume pour un fluide hydraulique (30) dudit ressort hydraulique, un élément de ressort (20) dudit ressort hydraulique étant connecté à ladite partie de ladite boîte d'essieu (10).

2. Unité boîte d'essieu-ressort selon la revendication 1, dans laquelle ladite partie de ladite boîte d'essieu (10) comprend une région en forme de coupe (12) de ladite boîte d'essieu (10).

3. Unité boîte d'essieu-ressort selon l'une des revendications 1 et 2, dans laquelle ledit élément de ressort (20) est fixé à ladite partie de la boîte d'essieu (10) par l'intermédiaire d'un dispositif d'étanchéité.

4. Unité boîte d'essieu-ressort selon la revendication 3, dans laquelle ledit dispositif d'étanchéité est une bague (42) vissée sur ladite partie de ladite boîte d'essieu (10).

5. Unité boîte d'essieu-ressort selon l'une des revendications 1 à 4, dans laquelle ledit élément de ressort (20) comprend au moins un élément en élastomère (22) qui est directement fixé sur ladite partie de ladite boîte d'essieu (10).

6. Unité boîte d'essieu-ressort selon l'une des revendications 1 à 5, dans laquelle ledit élément de ressort (20) comprend une pièce centrale (26) qui s'étend dans ledit volume pour ledit fluide hydraulique (30) formant une région en forme de piston (28).

7. Unité boîte d'essieu-ressort selon l'une des revendications 1 à 6, dans laquelle ledit élément de ressort (20) comprend des éléments en élastomère (22) et des éléments rigides (24) successivement alternés.

8. Unité boîte d'essieu-ressort selon la revendication 7, dans laquelle lesdits éléments en élastomère et lesdits éléments rigides (22, 24) sont en forme de manchon.

9. Unité boîte d'essieu-ressort selon l'une des revendications 7 et 8, dans laquelle lesdits éléments en élastomère (22) sont connectés auxdits éléments rigides (24) ou à ladite pièce centrale (26) par vulcanisation.
